# EUROPEAN PATENT SPECIFICATION

(11) **EP 3 838 689 B1**
(45) Date of publication and mention of the grant of the patent: **03.01.2024**
(21) Application number: 19849970.9
(22) Date of filing: 24.07.2019
(51) Int. Cl.: B60R 21/2338, B60R 21/207, B60R 21/231

(54) **SIDE AIRBAG DEVICE**
SEITENAIRBAGVORRICHTUNG
DISPOSITIF DE COUSSIN DE SÉCURITÉ GONFLABLE LATÉRAL

(30) Priority: 14.08.2018 JP 2018152740
(43) Date of publication of application: 23.06.2021
(73) Proprietor: Autoliv Development AB, 44783 Vargarda (SE)
(72) Inventor: YAMADA, Yoshihiro, Yokohama-shi, Kanagawa 222-8580 (JP); KOBAYASHI, Yuto, Yokohama-shi, Kanagawa 222-8580 (JP); OSATO, Shuichi, Yokohama-shi, Kanagawa 222-8580 (JP)
(74) Representative: Müller Verweyen
(86) International application number: PCT/JP2019/029030
(87) International publication number: WO 2020/036048

(56) References cited:
- WO-A1-2017/179839
- WO-A1-2018/037110
- KR-A- 20170 051 824
- US-A1- 2006 131 847
- US-B1- 9 994 181

## Description

### [TECHNICAL FIELD]

The present invention relates to a side airbag device equipped in a vehicle.

### [BACKGROUND]

This type of side airbag device is disclosed in Patent Documents 1 to 3.

Patent Document 1 discloses a tether attached to each of an upper portion and lower portion of an outer surface on an occupant side of an airbag in a frontback direction. In this case, the length of the tether is shorter than the length of front and rear attaching points of the airbag such that a space is formed between the tether and the airbag when the airbag is deployed. According to Patent Document 1, when the airbag is deployed, first, an occupant laterally impacts the tethers, and the tethers pushed by the lateral impact pulls the airbag. Thereby, a constant shape is maintained during airbag deployment. A further patent document US 2006/131847 A1 discloses as well a side airbag with a tether attached with a front and a rear end of the tether to front and rear airbag portions respectively pulls said airbag to form a bent portion.

### [Related Art Documents]

### [Patent Documents]

[Patent Document 1] Korean Unexamined Patent Application 2004-24278
[Patent Document 2] Korean Unexamined Patent Application 2004-24280
[Patent Document 3] Japanese PCT Application 2017-514746

### [SUMMARY OF THE INVENTION]

### [Problem to be Solved by the Invention]

However, in Patent Document 1, both ends of the tethers are attached to the airbag, and therefore, a front portion and rear portion of the airbag are pulled by the tethers which are pushed by the occupant. Therefore, when the airbag is pulled from two sides on the front and rear, the airbag may be pulled in an unintended direction, and thus the airbag may have an unintended shape. Furthermore, when an occupant is moved forward in the event of a vehicle side collision, behavior of the airbag for restraining the movement of the occupant is not sufficiently considered in Patent Document 1, and there is room for improvement.

An object of the present invention is to provide a side airbag device capable of appropriately manipulating an airbag to an intended shape, and having improved occupant protecting performance.

### [Means for Solving the Problem]

A side airbag device according to the present invention is defined by claim 1.

According to this aspect, one attaching point of the tether is the second expanding portion of the airbag, and another attaching point of the tether is the seat frame of the vehicle seat. Therefore, the section of the airbag pulled by the tether that is pushed due to being in contact with the shoulder of the occupant during deployment is the second expanding portion. Thereby, the second expanding portion can be reliably guided toward a front part of the occupant without pulling on another section of the airbag. Therefore, the expanded and deployed airbag can be pulled in an intended direction, and can be appropriately manipulated to an intended shape. Furthermore, with this manipulation, the second expanding portion approaches a front part of the occupant, and therefore, movement of the occupant in the event of a vehicle side collision can be restrained by the second expanding portion.

Note that the side airbag device according to an aspect of the present invention is preferably used as a side airbag provided between seats in a region on an opposite side from the vehicle door with regard to the occupant (far side airbag or front center airbag).

### [Effect of the Invention]

With the side airbag device of the present invention, the airbag can be appropriately manipulated to an intended shape, and thus occupant protecting performance can be improved.

### [BRIEF DESCRIPTION OF THE DRAWINGS]

FIG. 1 is a perspective view of a side airbag device according to an embodiment, illustrating the airbag in an expanded and deployed condition along with an occupant and a vehicle seat.
FIG. 2 is a plan view of the side airbag device in FIG. 1, illustrating the airbag in an expanded and deployed condition along with the occupant and the vehicle seat.
FIG. 3 is a partial plan perspective view of the side airbag device in FIG. 1, illustrating the airbag in an expanded and deployed condition and an inflator therein along with a portion of a seat frame.
FIG. 4 is a partial plan perspective view of a side airbag device according to another embodiment, illustrating the airbag in an expanded and deployed condition and the inflator therein along with a portion of the seat frame.

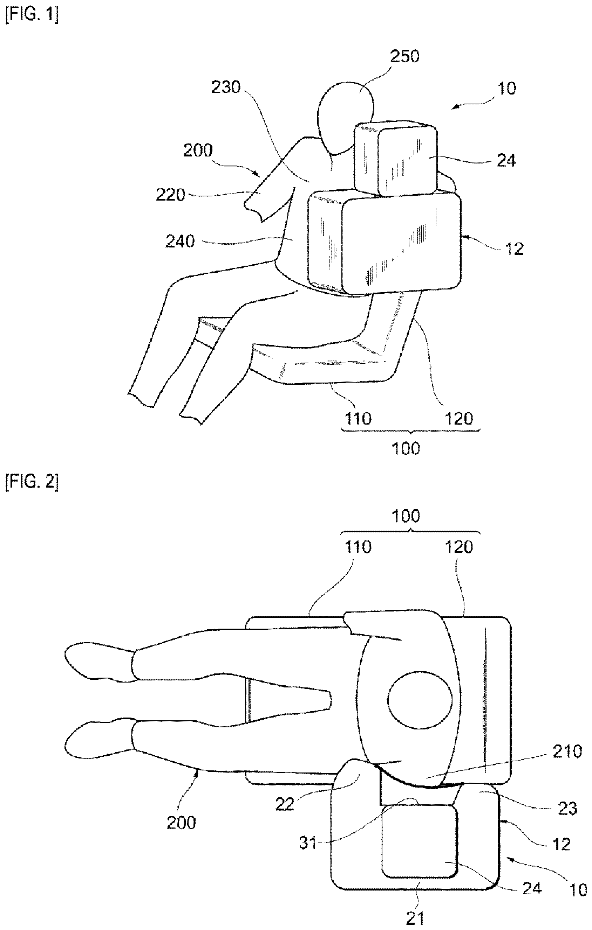

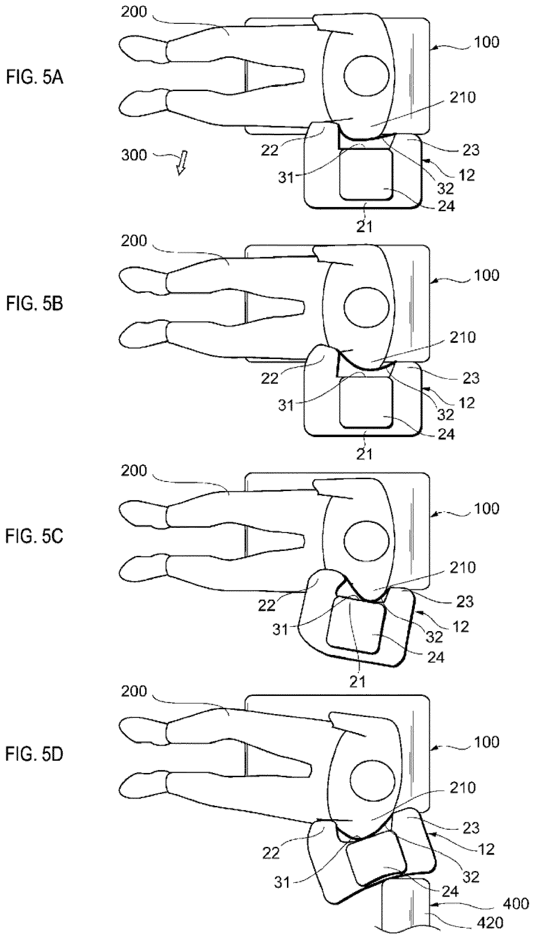

FIG. 5 is a plan view illustrating a manipulation process of the airbag in the side airbag device in FIG. 1, where (A) illustrates a condition immediately after the airbag is deployed, (B) illustrates a condition where a shoulder of the occupant contacts the tether and the second expanding portion of the airbag approaches a front part of the occupant, (C) illustrates a condition where the second expanding portion of the airbag further approaches the front part of the occupant, which is an initial condition where the occupant bends toward a center direction, and (D) illustrates a condition where the occupant further bends toward the center direction.
FIG. 6 is a front surface view illustrating the manipulation process of the airbag in the side airbag device in FIG. 1, where (A) illustrates a condition corresponding to FIG. 5(A), in other words, the condition immediately after the airbag is deployed, (B) illustrated a condition corresponding to FIG. 5(C), in other words, the initial condition where the occupant bends toward the center direction, and (C) illustrates a condition where a fourth expanding portion of the airbag restrains the head of the occupant.

### EMBODIMENT OF THE INVENTION

The side airbag device according to the preferred embodiments of the present invention is described with reference to the accompanying drawings.

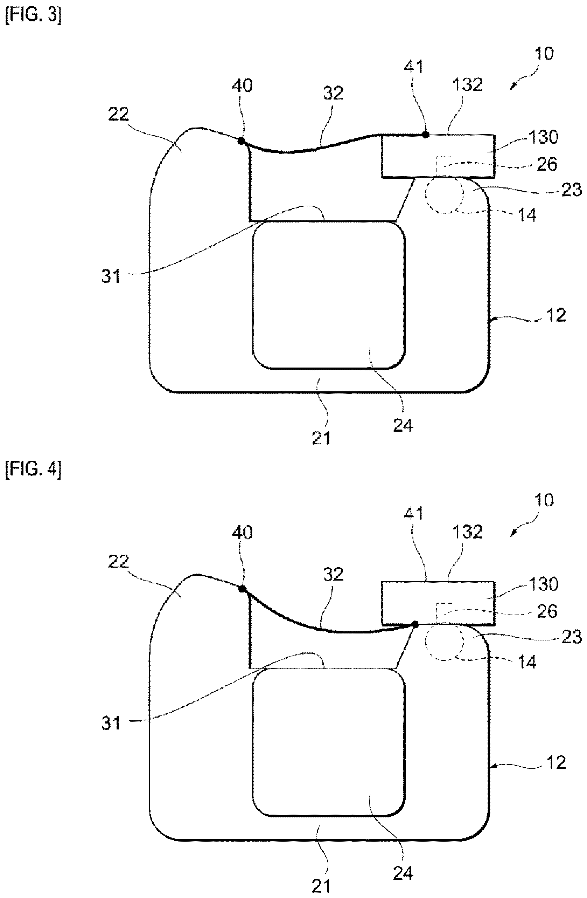

As illustrated in FIGS. 1 and 2, a side airbag device 10 has: an airbag 12 that expands and deploys in a side of a seat 100 in a vehicle; and an inflator 14 (refer to FIG. 3) that supplies a gas for expansion and deployment to the airbag 12. The inflator 14 is electrically connected to the vehicle side. For example, the inflator 14 receives a signal detecting an impact of a vehicle side collision from a vehicle side and instantaneously supplies gas to the airbag 12. The inflator 14 can be one of various types of inflators such as inflators filled with a gas generating agent, compressed gas, or both, and the like. As an example, the inflator 14 has an igniting device at an open end of a cylindrical body with a bottom. When a gas generating agent in the cylindrical body is ignited using this igniting device, gas is generated, and the gas for expansion and deployment is supplied into the airbag 12 from a plurality of discharge ports located on a peripheral surface of the cylindrical body.

The seat 100 is, for example, a driver seat or front passenger seat, but may be a rear seat. The seat 100 has a seat cushion 110 where an occupant 200 sits and a seat back 120 that supports the back of the occupant 200. The seat back 120 has a seat frame 130 (refer to FIG. 3) forming a skeleton of the seat. The seat frame 130 is obtained by processing a metal component or hard resin, which is covered by a seat trim that directly contacts the back of the occupant 200.

When equipped in a vehicle, the side airbag device 10, for example, is internally provided in a side portion of the seat back 120 on a vehicle outer side (side door side of vehicle), and the airbag 12 and inflator 14 are attached to the seat frame 130 (refer to FIG. 3). Furthermore, in the event of a side collision of the vehicle, for example, the side airbag system 10 breaks through the seat trim and exposes the airbag 12 outside of the seat back 120 by expanding and deploying the airbag 12 between the seat 100 and the side door of the vehicle. Thereby, the occupant 200 is restrained from the side by the expanded and deployed airbag 12.

In another embodiment, the side airbag device 10 may be internally provided in a side portion of the seat back 120 on a vehicle inner side. In other words, the side airbag device 10 may be a far side airbag. In this case, the airbag 12 to be expanded and deployed may be provided, for example, between the vehicle seat 100 and a center console of the vehicle. The center console is, for example, provided between two seats.

The airbag 12 is formed in a bag shape, for example, by sewing or adhering one or a plurality of base materials or the like at an appropriate position, and changes shape from a flat condition to deployed condition by receiving the supply of gas for expansion and deployment. The airbag 12 in the flat condition is, for example, rolled or folded in a roll shape, an accordion shape, or a combined form thereof, and is stored in a side portion of the seat back 120 in a vehicle width direction. The airbag 12 expands and deploys in an upward direction by the gas supplied from the inflator 14, and protects the shoulder 210, arm 220, chest 230, abdomen 240, head 250, and the like of the occupant 200 in a regular seated condition.

As illustrated in FIGS. 2 and 3, the airbag 12 in the deployed condition is divided into regions in relation to position of the occupant 200 in a regular seated condition, and the airbag 12 can be said to have first to fourth expanding portions 21, 22, 23, and 24. The first expanding portion 21 expands and deploys to a side of the shoulder 210 of the occupant 200. The second expanding portion 22 expands and deploys further forward than the first expanding portion 21. For example, the second expanding portion 22 deploys in front of the occupant 200 so as to cover at least a portion of an upper arm of the occupant 200 as viewed from a front surface side of the occupant 200. The third expanding portion 23 expands and deploys further rearward than the first expanding portion 21. In relation to the seat frame 130, the third expanding portion 23 expands and deploys to a side of the seat frame 130. The fourth expanding portion 24 expands and deploys further above the first expanding portion 21, second expanding portion 22, and third expanding portion 23, and to a side of the head 250 of the occupant 200.

The height of each of the first expanding portion 21, second expanding portion 22, and third expanding portion 23 is, for example, a height spanning from the shoulder 210 to the abdomen 240 of the occupant 200. Furthermore, the length in the front-rear direction of each of the first expanding portion 21, second expanding portion 22, and third expanding portion 23 is the length obtained by dividing the length of the airbag 12 in the front-rear direction into approximately three equal parts. Therefore, the first expanding portion 21 is positioned at a center of the airbag 12 in the front-rear direction. The fourth expanding portion 24 is provided directly above the first expanding portion 22. The second expanding portion 22 protrudes more toward the occupant 200 side than the third expanding portion 23. Furthermore, in relation to the seat frame 130, the second expanding portion 22 protrudes more to a seat center side (occupant 200 side) than a side frame end part 132 of the seat frame 130.

The third expanding portion 23 internally contains the inflator 14, and is co-fastened along with the inflator 14 to the seat frame 130. For example, a stud bolt 26 that fastens the inflator 14 to the seat frame 130 penetrates a base material configuring the third expanding portion 23, and secures the base material on an outer surface of the seat frame 130 along with the inflator 14. In another embodiment, instead of co-fastening, the third expanding portion 23 and inflator 14 may be separately attached to the seat frame 130. However, by co-fastening as described above, securing of the inflator 14 to the seat frame 130 can be effectively used to secure the airbag 12 to the seat frame 130.

The first to fourth expanding portions 21, 22, 23, and 24 may be formed as one expanding chamber or may be formed as a plurality of expanding chambers. For example, all or some of the first to fourth expanding portions 21, 22, 23, and 24 may be formed as mutually independent expanding chambers, and the expanding chambers may be mutually connected such that gas can flow. If formed as a plurality of expanding chambers, the airbag 12 may have one or a plurality of non-expanding portions.

The airbag 12 has a recessed part 31 formed between the second expanding portion 22 and third expanding portion 23. The recessed part 31 is a space formed so as to move away from the shoulder 210 of the occupant 200 or extend toward the first expanding portion 21, when the airbag 12 is viewed from above. In other words, the recessed part 31 is formed, and therefore, the second expanding portion 22 and third expanding portion 23 protrude more toward the occupant 200 side than the first expanding portion 21 in the airbag 12. Similar to the first expanding portion 21, the recessed part 31 is positioned at the center of the airbag 12 in the front-rear direction. Furthermore, the recessed part 31 is formed, for example, over a height direction of the first expanding portion 21, second expanding portion 22, and third expanding portion 23.

In the airbag device 10, a tether 32 opposes the first expanding portion 21 via the recessed part 31. The tether 32 is attached to the second expanding portion 22 and seat frame 130 so as to bridge the recessed part 31. The tether 32 extends in a front-rear direction of the airbag 12, and two end parts 40 and 41 in the front-rear direction are respectively attached to the second expanding portion 22 and seat frame 130. The end part 40 on a front side of the tether 32 is attached at a section in the second expanding portion 22 on the recessed part 31 side. In other words, an attaching point of the tether 32 to the second expanding portion 22 is provided at a section in the second expanding portion 22 on the recessed part 31 side. Furthermore, the attaching point is also a section in the second expanding portion 22 on the occupant 200 side. On the other hand, the end part 41 on a rear side of the tether 32 is attached to an inner side of the seat frame 130. In other words, an attaching point of the tether 32 to the seat frame 130 is provided on an inner side of the seat frame 130, which is the occupant side or vehicle inner side. However, in another embodiment, as illustrated in FIG. 4, an attaching point of the tether 32 to the seat frame 130 may be provided on an outer side of the seat frame 130, which is the vehicle outer side.

The tether 32 can be formed by one or a plurality of base materials. For example, the tether 32 can be formed by a fiber material such as a polyamide synthetic resin or the like. Attachment of the tether 32 to the second expanding portion 22 and seat frame 130 can be performed by sewing, adhering, or by another device. A length of the tether 32 is shorter than a distance between the two attaching points of the tether 32 such that tension acts on the tether 32 in the deployed condition of the airbag 12. The tether 32 can have various planar shapes so long as the tether 32 is attached to the second expanding portion 22 and seat frame 130 so as to bridge the recessed part 31. Examples include strip shapes, Y shapes, U shapes, and the like. The attaching position of the tether 32 in the height direction preferably may include positions where the tether 32 can come in contact with the shoulder 210 of the occupant 200. Therefore, the tether 32 may be formed across the height direction of the first expanding portion 21, or a portion thereof. Furthermore, a plurality of tethers 32 may be provided in the height direction.

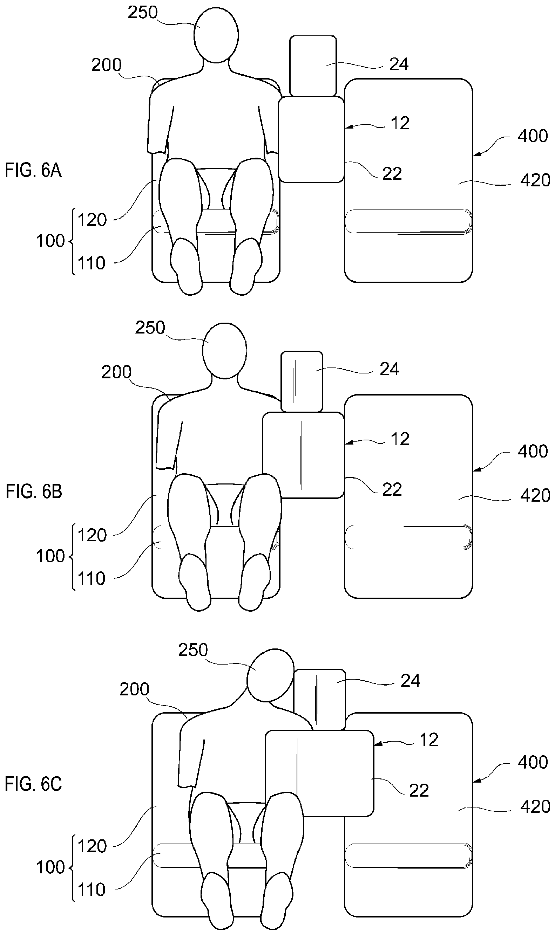

Next, a manipulation process of the airbag 12 with regard to the occupant 200 in a regular seated condition is described while referring to FIGS. 5 and 6. Herein, a case will be described where the side airbag device 10 is a far side airbag and a separate seat 400 (for example, front passenger seat) is present next to the seat 100 (for example, driver seat) where the side airbag device 10 is provided.
First, when the inflator 14 is activated in the event of a vehicle side collision, the airbag 12 is manipulated in a deployed condition as illustrated in FIG. 5(A) and FIG. 6(A) by the first to fourth expanding portions 21 to 24 that are expanded and deployed by the gas supplied from the inflator 14. Thereafter, the occupant 200 may move forward or to the side due to the impact of the side collision. For example, in a far side test mode, the occupant 200 can be moved 15 degrees diagonally forward as illustrated by arrow 300 in FIG. 5(A).

When the occupant 200 moves in this manner, first, in the side airbag device 10, the shoulder 210 of the occupant 200 contacts the tether 32, and pushes the tether 32 to the recessed part 31, as illustrated in FIG. 5(B). Then, the pushed tether 32 pulls the second expanding portion 22 in a direction closer to a front part of the occupant 200. In other words, a rear end part of the second expanding portion 22 on the occupant side is pulled into the recessed part 31 by the pushed tether 32. At this stage, the recessed part 31 is not eliminated. In other words, the tether 32 gradually reduces the distance from a section in the first expanding portion 21 on the third expanding portion 23 side, and narrows the recessed part 31, but faces the first expanding portion 21 via the space.

Furthermore, when the movement of the occupant 200 further progresses, in other words, when the occupant 200 begins to bend in a center direction (center side of vehicle), the shoulder 210 of the occupant 200 continues to push the tether 32 to the recessed part 31 side, and as illustrated in FIG. 5(C) and FIG. 6(B), the second expanding portion 22 further approaches the front part of the occupant 200. This is because the rear end part of the second expanding portion 22 on the occupant side is further pulled into the recessed part 31 by the tether 32 pushed by the occupant 200. At this stage, the tether 32 contacts the section in the first expanding portion 21 on the third expanding portion 23 side. Furthermore, at least at this stage, the second expanding portion 22 pulled into the recessed part 31 contacts the front part (for example, front part of the shoulder 210, arm 220, chest 230, and abdomen 240) of the occupant 200, and the airbag 12 acts to wrap around the upper body of the occupant 200 beginning to bend in the center direction. Thus, when the airbag 12 expands and deploys, the second expanding portion 22 begins to go around in front of the occupant 200 and begins to wrap around at least the shoulder of the occupant 200 along with the first expanding portion 21 and third expanding portion 23.

Furthermore, as illustrated in FIG. 5(D), when the occupant 200 further bends in the center direction, the entire airbag 12 leans in an opposite direction from the occupant 200. At this time, the airbag 12 interferes with the seat back 420 of the adjoining seat 400. When a front portion of the airbag 12 moves in the opposite direction from the occupant 200, the second expanding portion 22 in the front portion of the airbag 12 goes around the front of the occupant 200 due to the tether 32. In other words, while the airbag 12 leaning in the opposite direction from the occupant 200 interferes with the seat back 420 of the adjoining seat 400, the second expanding portion 22 goes around in front of the occupant 200 due to the tether 32, and wraps around at least the shoulder of the occupant 200 along with the first expanding portion 21 and third expanding portion 23. Finally, the first expanding portion 21, second expanding portion 22, and third expanding portion 23 restrain the upper body of the occupant 200, and then, as illustrated in FIG. 6(C), the fourth expanding portion 24 restrains the head 250 of the occupant 200.

As described above, in the side airbag device 10 of the present embodiment, the airbag 12 has the first expanding portion 21, second expanding portion 22, third expanding portion 23, and recessed part 31, and the tether 32 is attached to the second expanding portion 22 and seat frame 130 so as to bridge the recessed part 31, and opposes the first expanding portion 21 via the recessed part 31. Upon deployment of the airbag 12, the tether 32 comes into contact with the shoulder 210 of the occupant 200, and therefore, the second expanding portion 22 changes shape in a direction closer to a front of the occupant 200.

With this configuration, upon airbag deployment, the tether 32 pushed from the shoulder 210 of the occupant 200 pulls the second expanding portion 22 of the sections of the airbag 12. Therefore, the tether 32 does not pull on another section of the airbag 12, and therefore, the second expanding portion 22 can be reliably guided in a direction closer to the front part of the occupant 200. Therefore, the expanded and deployed airbag 12 can be pulled in an intended direction, and can be appropriately manipulated to an intended shape. Furthermore, with this manipulation, the second expanding portion 22 approaches the front part of an occupant 200, and therefore, movement of the occupant 200 in the event of a vehicle side collision can be restrained by the second expanding portion 22. Thus, occupant protecting performance is improved.

In particular, the airbag 12 is configured such that upon expansion and deployment, the second expanding portion 22 manipulated by the tether 32 wraps around at least the shoulder 210 of the occupant 200 along with the first expanding portion 21 and third expanding portion 23. Thereby, restraining performance with regard to the occupant 200 increases, and thus the occupant protecting performance is further improved.

Furthermore, the attaching point of the tether 32 to the seat frame 130 is provided inside the seat frame 130 (refer to FIG. 3). Therefore, the distance between the tether 32 and first expanding portion 21 can be ensured to be relatively longer than when the attaching point is provided outside of the seat frame 130 (refer to FIG. 4). Thereby, when the tether 32 is pushed, the amount of movement of the second expanding portion 22 pulled by the tether 32 can be increased, and therefore, the second expanding portion 22 can approach the front part of the occupant 200.

On the other hand, in the aspect of FIG. 4 where the attaching point of the tether 32 to the seat frame 130 is provided on the outside of the seat frame 130, the second expanding portion 22 can approach the front part of the occupant 200 due the tether 32. This aspect is useful from the perspective of favorable workability of attaching the tether 32 to the seat frame 130.

Furthermore, the attaching point of the tether 32 to the second expanding portion 22 is provided at a section in the second expanding portion 22 on the recessed part 31 side. Thereby, when the tether 32 pulls the second expanding portion 22, the second expanding portion 22 can be easily pulled to the front side of the occupant 200. Furthermore, the attaching point of the tether 32 to the second expanding portion 22 is also provided at a section in the second expanding portion 22 on the occupant side. Thereby, when the tether 32 pulls the second expanding portion 22, the second expanding portion 22 similarly can be easily pulled to the front side of the occupant 200.

Furthermore, the airbag 12 has the fourth expanding portion 24, and therefore, the head of the occupant 200 can also be restrained and protected from the side. In particular, in the airbag 12, the first expanding portion 21, second expanding portion 22, and third expanding portion 23 wrap around at least the shoulder 210 of the occupant 200 (refer to FIG. 5(D), and then, as illustrated in FIG. 6(C), the fourth expanding portion 24 restrains the head 250 of the occupant 200. Thereby, the upper body of the occupant 200 is restrained, and then the head of the occupant 200 can be restrained. Thus, occupant protecting performance is further improved.

The embodiments described above are for ease of understanding of the present invention and are not intended to be construed as limiting the present invention.

### EXPLANATION OF CODES

10... Side airbag device, 12... Airbag, 14... Inflator, 21...First expanding portion, 22... Second expanding portion, 23... Third expanding portion, 24... Fourth expanding portion, 26... Stud bolt, 31... Recessed part, 32... Tether, 40... End part, 41... End part, 100... Seat, 110... Seat cushion, 120... Seat back, 130... Seat frame, 132... Side frame end part, 200... Occupant, 210... Shoulder, 220... Arm, 230... Chest, 240... Abdomen, 250... Head, 300... Arrow

## Claims

1. A side airbag device (10), comprising:
an inflator (14) attached to a seat frame (130) of a vehicle seat (100) where an occupant (200) sits; and
an airbag (12) that expands and deploys by a gas supplied from the inflator (14);
the airbag (12) comprising:
a first expanding portion (21) that expands and deploys toward a side of a shoulder (210) of the occupant (200);
a second expanding portion (22) that expands and deploys farther forward than the first expanding portion (21);
a third expanding portion (23) that expands and deploys father rearward than the first expanding portion (21); and
a tether (32) attached to the second expanding portion (22) and the seat frame (130)
**characterized in that**
a recessed part (31) is formed by the second expanding portion (22) and the third expanding portion (23) protruding more forward toward the occupant side than the first expanding portion (21), and
the tether (32) bridges the recessed part (31), and opposing the first expanding portion (21) via the recessed part (31); wherein, when the tether (32) comes in contact with a shoulder (210) of the occupant (200) upon expansion and deployment of the airbag (12), the second expanding portion (22) changes shape in a direction closer to a front part of the occupant (200).

2. The side airbag device (10) according to claim 1, wherein the airbag (12) is configured such that upon expansion and deployment, the second expanding portion (22) manipulated by the tether (32) wraps around at least a shoulder (210) of the occupant (200) along with the first expanding portion (21) and third expanding portion (23).

3. The side airbag device (10) according to claim 2, wherein upon expansion and deployment, the airbag (12) interferes with the seat back (120) of a vehicle seat (400) that is adjacent to the aforementioned vehicle seat (100), and the second expanding portion (22) goes around in front of the occupant (200) because of the tether (32) and wraps around at least a shoulder (210) of the occupant (200).

4. The side airbag device (10) according to any one of claims 1 to 3, wherein an attaching point of the tether (32) to the seat frame (130) is provided inside the seat frame (130).

5. The side airbag device (10) according to any one of claims 1 to 3, wherein an attaching point of the tether (32) to the seat frame (130) is provided outside the seat frame (130).

6. The side airbag device (10) according to any one of claims 1 to 5, wherein an attaching point of the tether (32) to the second expanding portion (22) is provided at a section on the recessed part side in the second expanding portion (22).

7. The side airbag device (10) according to any one of claims 1 to 6, wherein an attaching point of the tether (32) to the second expanding portion (22) is provided at a section on the occupant side in the second expanding portion (22).

8. The side airbag device (10) according to any one of claims 1 to 7, wherein the tether (32) extends in a front-rear direction of the airbag (12), and two end parts (40,41) in the front-rear direction are attached to the second expanding portion (22) and the seat frame (130).

9. The side airbag device (10) according to any one of claims 1 to 8, wherein the second expanding portion (22) protrudes more toward the occupant side than the third expanding portion (23).

10. The side airbag device (10) according to any one of claims 1 to 9, wherein the first expanding portion (21) is positioned at a center in the front-rear direction of the airbag (12).

11. The side airbag device (10) according to any one of claims 1 to 10, wherein the third expanding portion (23) internally contains the inflator (14), and is co-fastened along with the inflator (14) to the seat frame (130).

12. The side airbag device (10) according to any one of claims 1 to 11, wherein the airbag (12) further contains a fourth expanding portion (24) that expands and deploys toward a side of the head (250) of the occupant (200) higher than the first expanding portion (21), the second expanding portion (22), and the third expanding portion (23).

13. The side airbag device (10) of claim 12, wherein the fourth expanding portion (24) is provided directly above the first expanding portion (21).

14. The side airbag device (10) according to claim 12 or 13, wherein the airbag (12) is configured such that upon expansion and deployment, the second expanding portion (22) manipulated by the tether (32) wraps around at least a shoulder (210) of the occupant (200) along with the first and third expanding portions (21,23), and then the fourth expanding portion (24) restrains the head (250) of the occupant (200).

## Patentansprüche

1. Seitenairbagvorrichtung (10), umfassend:
einen Gasgenerator (14), der an einem Sitzrahmen (130) eines Fahrzeugsitzes (100), wo ein Insasse (200) sitzt, befestigt ist; und
einen Airbag (12), der sich durch ein Gas, das von dem Gasgenerator (14) zugeführt wird, ausdehnt und entfaltet;
der Airbag (12) umfassend:
einen ersten Ausdehnungsabschnitt (21), der sich zu einer Seite einer Schulter (210) des Insassen (200) hin ausdehnt und entfaltet;
einen zweiten Ausdehnungsabschnitt (22), der sich weiter nach vorn als der erste Ausdehnungsabschnitt (21) ausdehnt und entfaltet;
einen dritten Ausdehnungsabschnitt (23), der sich weiter nach hinten als der erste Ausdehnungsabschnitt (21) ausdehnt und entfaltet; und
einen Haltegurt (32), der an dem zweiten Ausdehnungsabschnitt (22) und dem Sitzrahmen (130) befestigt ist, **dadurch gekennzeichnet, dass** ein vertiefter Teil (31) durch den zweiten Ausdehnungsabschnitt (22) und den dritten Ausdehnungsabschnitt (23) ausgebildet wird, der mehr nach vorn zu der Insassenseite hin als der erste Ausdehnungsabschnitt (21) vorsteht, und
der Haltegurt (32) den vertieften Teil (31) überbrückt und dem ersten Ausdehnungsabschnitt (21) über den vertieften Teil (31) gegenüberliegt; wobei, wenn der Haltegurt (32) mit einer Schulter (210) des Insassen (200) bei einer Ausdehnung und Entfaltung des Airbags (12) in Berührung kommt, der zweite Ausdehnungsabschnitt (22) eine Form in einer Richtung näher an einem vorderen Teil des Insassen (200) ändert.

2. Seitenairbagvorrichtung (10) nach Anspruch 1, wobei der Airbag (12) derart konfiguriert ist, dass, bei der Ausdehnung und Entfaltung, der zweite Ausdehnungsabschnitt (22), der durch den Haltegurt (32) manipuliert wird, sich um mindestens eine Schulter (210) des Insassen (200) herum zusammen mit dem ersten Ausdehnungsabschnitt (21) und dem dritten Ausdehnungsabschnitt (23) wickelt.

3. Seitenairbagvorrichtung (10) nach Anspruch 2, wobei, bei der Ausdehnung und Entfaltung, der Airbag (12) mit der Sitzlehne (120) eines Fahrzeugsitzes (400), der an den zuvor genannten Fahrzeugsitz (100) angrenzend ist, kollidiert und der zweite Ausdehnungsabschnitt (22) aufgrund des Haltegurts (32) vor dem Insassen (200) herum geht und sich um mindestens eine Schulter (210) des Insassen (200) herum wickelt.

4. Seitenairbagvorrichtung (10) nach einem der Ansprüche 1 bis 3, wobei ein Befestigungspunkt des Haltegurts (32) an dem Sitzrahmen (130) innerhalb des Sitzrahmens (130) bereitgestellt ist.

5. Seitenairbagvorrichtung (10) nach einem der Ansprüche 1 bis 3, wobei ein Befestigungspunkt des Haltegurts (32) an dem Sitzrahmen (130) außerhalb des Sitzrahmens (130) bereitgestellt ist.

6. Seitenairbagvorrichtung (10) nach einem der Ansprüche 1 bis 5, wobei ein Befestigungspunkt des Haltegurts (32) an dem zweiten Ausdehnungsabschnitt (22) an einer Sektion an der Seite des vertieften Teils in dem zweiten Ausdehnungsabschnitt (22) bereitgestellt ist.

7. Seitenairbagvorrichtung (10) nach einem der Ansprüche 1 bis 6, wobei ein Befestigungspunkt des Haltegurts (32) an dem zweiten Ausdehnungsabschnitt (22) an einer Sektion an der Insassenseite in dem zweiten Ausdehnungsabschnitt (22) bereitgestellt ist.

8. Seitenairbagvorrichtung (10) nach einem der Ansprüche 1 bis 7, wobei sich der Haltegurt (32) in einer Vorne-Hinten-Richtung des Airbags (12) erstreckt und zwei Endteile (40, 41) in der Vorne-Hinten-Richtung an dem zweiten Ausdehnungsabschnitt (22) und dem Sitzrahmen (130) befestigt sind.

9. Seitenairbagvorrichtung (10) nach einem der Ansprüche 1 bis 8, wobei der zweite Ausdehnungsabschnitt (22) mehr zu der Insassenseite hin als der dritte Ausdehnungsabschnitt (23) vorsteht.

10. Seitenairbagvorrichtung (10) nach einem der Ansprüche 1 bis 9, wobei der erste Ausdehnungsabschnitt (21) in einer Mitte in der Vorne-Hinten-Richtung des Airbags (12) positioniert ist.

11. Seitenairbagvorrichtung (10) nach einem der Ansprüche 1 bis 10, wobei der dritte Ausdehnungsabschnitt (23) den Gasgenerator (14) intern enthält und zusammen mit dem Gasgenerator (14) an dem Sitzrahmen (130) gemeinsam fixiert ist.

12. Seitenairbagvorrichtung (10) nach einem der Ansprüche 1 bis 11, wobei der Airbag (12) ferner einen vierten Ausdehnungsabschnitt (24) enthält, der sich zu einer Seite des Kopfs (250) des Insassen (200) hin höher als der erste Ausdehnungsabschnitt (21), der zweite Ausdehnungsabschnitt (22) und der dritte Ausdehnungsabschnitt (23) ausdehnt und entfaltet.

13. Seitenairbagvorrichtung (10) nach Anspruch 12, wobei der vierte Ausdehnungsabschnitt (24) direkt oberhalb des ersten Ausdehnungsabschnitts (21) bereitgestellt ist.

14. Seitenairbagvorrichtung (10) nach Anspruch 12 oder 13, wobei der Airbag (12) derart konfiguriert ist, dass, bei der Ausdehnung und Entfaltung, der zweite Ausdehnungsabschnitt (22), der durch den Haltegurt (32) manipuliert wird, sich mindestens um eine Schulter (210) des Insassen (200) zusammen mit dem ersten und dem dritten Ausdehnungsabschnitt (21, 23) herum wickelt und dann der vierte Ausdehnungsabschnitt (24) den Kopf (250) des Insassen (200) zurückhält.

## Revendications

1. Dispositif de coussin de sécurité gonflable latéral (10) comprenant :
un dispositif de gonflage (14) fixé à un châssis de siège (130) d'un siège de véhicule (100) où un occupant (200) s'assoit ; et
un coussin de sécurité gonflable (12) qui s'épand et se déploie par un gaz fourni à partir du dispositif de gonflage (14) ;
le coussin de sécurité gonflable (12) comprenant :
une première portion expansible (21) qui s'épand et se déploie vers un côté d'une épaule (210) de l'occupant (200) ;
une deuxième portion expansible (22) qui s'épand et se déploie plus loin vers l'avant que la première portion expansible (21) ;
une troisième portion expansible (23) qui s'épand et se déploie plus loin vers l'arrière que la première portion expansible (21) ; et
une attache (32) fixée à la deuxième portion expansible (22) et au châssis de siège (130) **caractérisé en ce qu'**une partie évidée (31) est formée par la deuxième portion expansible (22) et la troisième portion expansible (23) faisant saillie plus vers l'avant vers le côté occupant que la première portion expansible (21), et
l'attache (32) forme un pont sur la partie évidée (31), et à l'opposé de la première portion expansible (21) par l'intermédiaire de la partie évidée (31) ; dans lequel, lorsque l'attache (32) vient en contact avec une épaule (210) de l'occupant (200) lors de l'expansion et du déploiement du coussin de sécurité gonflable (12), la deuxième portion expansible (22) change de forme dans une direction plus proche d'une partie avant de l'occupant (200).

2. Dispositif de coussin de sécurité gonflable latéral (10) selon la revendication 1, dans lequel le coussin de sécurité gonflable (12) est conçu de telle sorte que lors de l'expansion et du déploiement, la deuxième portion expansible (22) manipulée par l'attache (32) s'enroule autour d'au moins une épaule (210) de l'occupant (200) conjointement avec la première portion expansible (21) et la troisième portion expansible (23).

3. Dispositif de coussin de sécurité gonflable latéral (10) selon la revendication 2, dans lequel lors de l'expansion et du déploiement, le coussin de sécurité gonflable (12) interfère avec le dossier de siège (120) d'un siège de véhicule (400) qui est adjacent au siège de véhicule (100) susmentionné, et la deuxième portion expansible (22) fait un tour devant l'occupant (200) en raison de l'attache (32) et s'enroule autour d'au moins une épaule (210) de l'occupant (200).

4. Dispositif de coussin de sécurité gonflable latéral (10) selon l'une quelconque des revendications 1 à 3, dans lequel un point de fixation de l'attache (32) au châssis de siège (130) est prévu à l'intérieur du châssis de siège (130).

5. Dispositif de coussin de sécurité gonflable latéral (10) selon l'une quelconque des revendications 1 à 3, dans lequel un point de fixation de l'attache (32) au châssis de siège (130) est prévu à l'extérieur du châssis de siège (130).

6. Dispositif de coussin de sécurité gonflable latéral (10) selon l'une quelconque des revendications 1 à 5, dans lequel un point de fixation de l'attache (32) à la deuxième portion expansible (22) est prévu au niveau d'une section sur le côté partie évidée dans la deuxième portion expansible (22).

7. Dispositif de coussin de sécurité gonflable latéral (10) selon l'une quelconque des revendications 1 à 6, dans lequel un point de fixation de l'attache (32) à la deuxième portion expansible (22) est prévu au niveau d'une section sur le côté occupant dans la deuxième portion expansible (22).

8. Dispositif de coussin de sécurité gonflable latéral (10) selon l'une quelconque des revendications 1 à 7, dans lequel l'attache (32) s'étend dans une direction avant-arrière du coussin de sécurité gonflable (12), et deux parties d'extrémité (40, 41) dans la direction avant-arrière sont fixées à la deuxième portion expansible (22) et au châssis de siège (130).

9. Dispositif de coussin de sécurité gonflable latéral (10) selon l'une quelconque des revendications 1 à 8, dans lequel la deuxième portion expansible (22) fait saillie plus vers le côté occupant que la troisième portion expansible (23).

10. Dispositif de coussin de sécurité gonflable latéral (10) selon l'une quelconque des revendications 1 à 9, dans lequel la première portion expansible (21) est positionnée au niveau d'un centre dans la direction avant-arrière du coussin de sécurité gonflable (12).

11. Dispositif de coussin de sécurité gonflable latéral (10) selon l'une quelconque des revendications 1 à 10, dans lequel la troisième portion expansible (23) contient intérieurement le dispositif de gonflage (14), et est attachée conjointement avec le dispositif de gonflage (14) au châssis de siège (130).

12. Dispositif de coussin de sécurité gonflable latéral (10) selon l'une quelconque des revendications 1 à 11, dans lequel le coussin de sécurité gonflable (12) contient en outre une quatrième portion expansible (24) qui s'épand et se déploie vers un côté de la tête (250) de l'occupant (200) plus haute que la première portion expansible (21), la deuxième portion expansible (22), et la troisième portion expansible (23).

13. Dispositif de coussin de sécurité gonflable latéral (10) selon la revendication 12, dans lequel la quatrième portion expansible (24) est prévue directement au-dessus de la première portion expansible (21).

14. Dispositif de coussin de sécurité gonflable latéral (10) selon la revendication 12 ou 13, dans lequel le coussin de sécurité gonflable (12) est conçu de telle sorte que lors de l'expansion et du déploiement, la deuxième partie expansible (22) manipulée par l'attache (32) s'enroule autour d'au moins une épaule (210) de l'occupant (200) conjointement avec les première et troisième parties expansibles (21, 23), puis la quatrième partie expansible (24) retient la tête (250) de l'occupant (200).
